# EUROPEAN PATENT APPLICATION

(11) **EP 3 127 644 A1**
(43) Date of publication of application: **08.02.2017**
(21) Application number: 16179019.1
(22) Date of filing: 12.07.2016
(51) Int. Cl.: B23H 7/06

(54) **WIRE ELECTRIC DISCHARGE MACHINE**

(30) Priority: 07.08.2015 JP 2015156723
(71) Applicant: FANUC CORPORATION, Oshino-mura Minamitsuru-gun Yamanashi 401-0597 (JP)
(72) Inventor: HADA, Keita, Minamitsuru-gun, Yamanashi 401-0597 (JP)
(74) Representative: Ward, James Norman

(57) **Abstract**

A wire electric discharge machine according to the present invention includes a wire electrode deflection detecting unit detecting a deflection of a fed wire electrode at the time of a wire automatic wire connection, a wire feeding unit feeding the wire electrode after the wire electrode deflection detecting unit detects the deflection of the wire electrode, a clocking unit clocking a time taken after the deflection of the wire electrode is detected, a determining unit determining whether the wire electrode deflection detecting unit detects the deflection of the wire electrode after the time clocked by the clocking unit exceeds a predetermined time, and a unit executing a retry operation of the automatic wire connection to rewind the wire electrode in a case where the determining unit detects the deflection of the wire electrode and continuing to feed the wire electrode in a case where the deflection of the wire electrode is not detected. An unnecessary retry operation can be eliminated at the time of automatic wire connection.

## Description

### BACKGROUND OF THE INVENTION

### 1. Field of the Invention

The present invention relates to a wire electric discharge machine, and particularly to a wire electric discharge machine with a function to detect a deflection of a wire electrode at the time of automatic wire connection.

### 2. Description of the Related Art

In wire electric discharge machining, a connection fault may occur. For example, the tip of a fed wire electrode is stuck during automatic wire connection. In such a case, generally, a retry operation is performed in which the fed wire electrode is rewound to remove the connection fault, and then the wire is fed again.

As a related art relating to the automatic wire connection of a wire electric discharge machine, JP 7-24644 A discloses a technique of detecting the connection fault by detecting a deflection which occurs when a roller feeds the wire electrode in a state where the tip of the wire electrode is stuck. In the related art, a detection electrode is disposed to face a wire path, and in a case where the wire electrode contacts with the detection electrode, a detection signal is output, and the deflection of the wire electrode is determined. In a case where the deflection of the wire electrode is determined, the retry operation is performed.

On the other hand, in the related art which is disclosed in JP 9-108950 A and relates to the automatic wire connection, it is determined whether the wire electrode is deflected after the wire electrode is fed to such a length that the tip of the wire electrode passes through a machining target.

In addition, even when the deflection of the wire electrode is detected, a wire connection operation continues without the retry operation if the deflection of the wire electrode is resolved by moving an axis on a predetermined path. With such a design, an unnecessary retry operation is reduced, and the time taken to connect a wire is shortened.

However, in the art disclosed in JP 7-24644 A, the stuck state is removed by a vibration or deformation of the wire electrode itself to resolve the deflection even when the tip of the wire electrode is stuck and deflected, and thus the wire electrode becomes a state where a normal wire connection is continued. In the above-described example, the retry operation is performed even in such a case since the deflection of the wire electrode is detected. There is a possibility that it takes a time to perform the unnecessary retry operation, and further the tip of the wire electrode is stuck again.

In addition, in the art disclosed in JP 9-108950 A, the deflection of the wire electrode is not detected until the wire electrode is fed to such a length that the tip of the wire electrode passes through the machining target. Accordingly, in a case where the connection fault occurs at an initial stage of the automatic wire connection, there is a concern that the length of the wire electrode, which is fed until the deflection of the wire electrode is detected, is long, and the connection fault develops into a serious connection fault which cannot be resolved by moving an axis (for example, the wire electrode is entangled). Particularly, the concern becomes serious in the case of using the machining target with a large plate thickness.

### SUMMARY OF THE INVENTION

An object of the present invention is to provide a wire electric discharge machine in which an unnecessary retry operation can be eliminated at the time of automatic wire connection.

A wire electric discharge machine according to the present invention includes a wire electrode deflection detecting unit detecting a deflection of a fed wire electrode at the time of a wire automatic wire connection, a wire feeding unit feeding the wire electrode after the wire electrode deflection detecting unit detects the deflection of the wire electrode, a clocking unit clocking a time taken after the deflection of the wire electrode is detected, a determining unit determining whether the wire electrode deflection detecting unit detects the deflection of the wire electrode after the time clocked by the clocking unit exceeds a predetermined time, and a unit executing a retry operation of the automatic wire connection to rewind the wire electrode in a case where the determining unit detects the deflection of the wire electrode and continuing to feed the wire electrode in a case where the deflection of the wire electrode is not detected.

In the wire electric discharge machine according to the present invention, it may be repeatedly determined whether the wire electrode deflection detecting unit detects the deflection of the wire electrode within the predetermined time clocked by the clocking unit, the clocking of the clocking unit may be ended in a case where the deflection of the wire electrode is not detected, and the retry operation may be executed after the elapse of the predetermined time in a case where the deflection of the wire electrode is detected in all determinations during the predetermined time.

In addition, in the wire electric discharge machine according to the present invention, the predetermined time may be set for each diameter or material of the wire electrode.

According to the present invention, the retry operation is not performed in a case where the deflection of the wire electrode is detected once, but the deflection is resolved before a predetermined time elapses, thereby shortening the wire connection time. In addition, the detection of the deflection is performed not depending on the length of the fed wire electrode, and thus even when the connection fault occurs at the initial stage of the automatic wire connection, the retry operation can be performed before the connection fault develops into the serious connection fault.

### BRIEF DESCRIPTION OF THE DRAWINGS

The above object, other objects, and features of the present invention will become clear through the description of the following embodiments with reference to the accompanying drawings as follows:
Fig. 1 is a configuration diagram illustrating a main portion of a wire electric discharge machine according to an embodiment of the present invention;
Fig. 2 is a flowchart illustrating an automatic wire connection control process according to the embodiment of the present invention; and
Fig. 3 is a flowchart illustrating a modification example of the automatic wire connection control process according to the embodiment of the present invention.

### DETAILED DESCRIPTION OF THE PREFERRED EMBODIMENTS

Hereinafter, embodiments of the invention will be described with reference to the drawings.

A wire electric discharge machine of the present invention does not immediately perform a retry operation even in a case where a deflection of the wire electrode is detected while automatic wire connection of a wire electrode is performed. After the elapse of a predetermined time, it is determined once more whether there is the deflection of the wire electrode. The retry operation is performed in the case of detecting the deflection of the wire electrode again. The process returns to an ordinary wire connection operation without performing the retry operation in the case of not detecting the deflection of the wire electrode again. In this manner, the retry operation is not performed, for example, in a case where the tip of the wire electrode is stuck and deflected, and the stuck state is removed by a vibration or deformation of the wire electrode itself so that a deflection is naturally resolved to continue a normal wire connection. Therefore, it is expected to shorten a wire connection time.

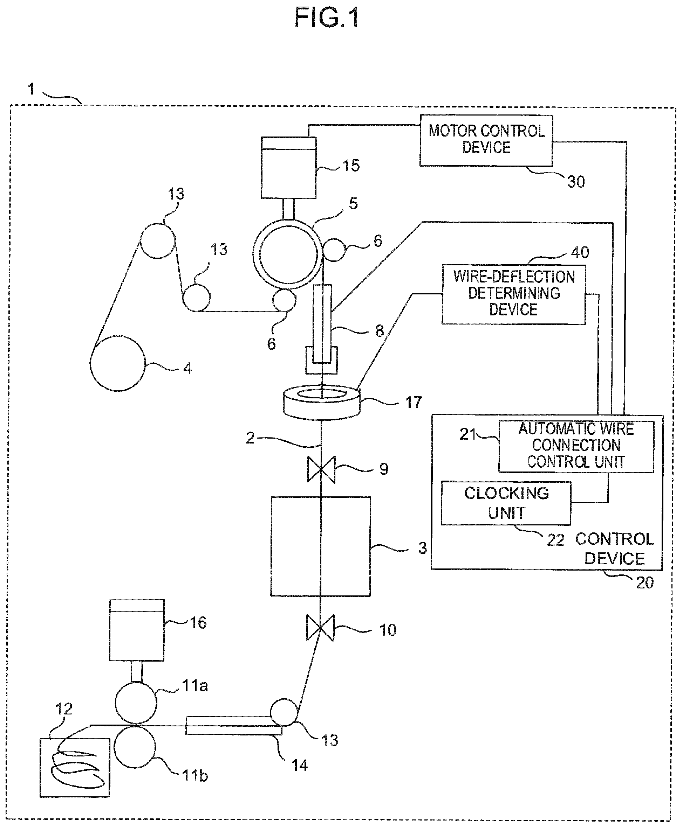

Fig. 1 is a configuration diagram illustrating a main portion of a wire electric discharge machine 1 according to an embodiment of the present invention, and mainly illustrates a traveling path of a wire electrode 2.

In the wire electric discharge machine 1 of this embodiment, the wire electrode 2 is provided and connected along the traveling path such that the wire electrode is extracted from a wire bobbin 4, passes by a guide roller 13 and a feed roller 5 driving a wire to travel, is interposed between the feed roller 5 and a pinch roller 6, passes by an upper wire guide 9 through an automatic wire connection device 8, passes through a workpiece 3 as a machining target (passes through a machining start hole machined in the workpiece 3 when starting electric discharge machining for the first time) , passes through a lower wire guide 10, the guide roller 13, and a guide tube 14, is interposed between two take-up rollers 11a and 11b, and is collected in a wasted wire collection box 12.

The feed roller 5 supplying the wire electrode 2 toward the workpiece 3 is driven by a motor 15 as a first motor, and the take-up rollers 11a and 11b are driven by a motor 16 as a second motor extracting the wire electrode 2 from the workpiece. A wire-deflection detection electrode 17 detects the deflection of the wire electrode 2 in an area where the wire electrode 2 performs the electric discharge machining on the workpiece 3, and is disposed between the feed roller 5 and the take-up rollers 11a and 11b. A wire deflection detection voltage is supplied to the wire-deflection detection electrode 17. In an example of Fig. 1, the wire-deflection detection electrode 17 is disposed between the automatic wire connection device 8 and the workpiece 3, and a wire connection is performed using the automatic wire connection device 8 when the wire bobbin 4 is exchanged, or the wire electrode 2 is disconnected during machining.

The automatic wire connection is performed under control of a control device 20. The control device 20 starts an automatic wire connection process by using an automatic wire connection control unit 21 when the disconnection of the wire electrode 2 is detected on the basis of a detection value detected from a voltage detector, a tension detector (not illustrated), or the like. In the automatic wire connection process, the automatic wire connection control unit 21 outputs a command relating to the automatic wire connection to a motor control device 30 controlling the motor 15 and the automatic wire connection device 8. The motor control device 30 controls the motor 15 such that the feed roller 5 is driven to feed the wire electrode 2 when receiving the command relating to the automatic wire connection. In addition, the automatic wire connection device 8 performs the automatic wire connection using the fed wire electrode 2 when receiving the command relating to the automatic wire connection.

Herein, the automatic wire connection control unit 21 completes the automatic wire connection process when the automatic wire connection device 8 completes the automatic wire connection without any problem, and the connection of the wire electrode 2 is detected on the basis of the detection value detected from the voltage detector, the tension detector (not illustrated), or the like.

On the other hand, when the deflection occurs in the wire electrode 2 during the automatic wire connection process, and the wire electrode 2 contacts with the wire-deflection detection electrode 17, a current flows to the wire electrode 2 through the wire-deflection detection electrode 17 due to the wire deflection detection voltage so that the voltage of the wire-deflection detection electrode 17 is changed. A wire-deflection determining device 40 monitors a change of the current or the voltage of the wire-deflection detection electrode 17, determines, on the basis of the change of the current or the voltage, that the wire electrode 2 contacts with the wire-deflection detection electrode 17, that is, the deflection occurs in the wire electrode 2, and outputs a signal of the determination result to the control device 20.

When receiving the signal indicating the deflection occurrence of the wire electrode 2 from the wire-deflection determining device 40, the automatic wire connection control unit 21 does not immediately perform the retry operation, but commands a clocking unit 22 clocking a time by using an RTC and the like stored in the control device 20 to clock the elapse of time from the detection of the deflection of the wire electrode 2, and controls the motor control device 30 to continue to feed the wire. Then, after the elapse of a time predetermined in a memory (not illustrated) and the like of the control device 20, the automatic wire connection control unit 21 refers again to the signal which is output from the wire-deflection determining device 40 and indicates the deflection occurrence of the wire electrode 2. The automatic wire connection control unit 21 continues the automatic wire connection process without change in a case where the deflection of the wire electrode 2 is resolved. The automatic wire connection control unit 21 performs the retry operation of the automatic wire connection in a case where the deflection of the wire electrode 2 is not resolved.

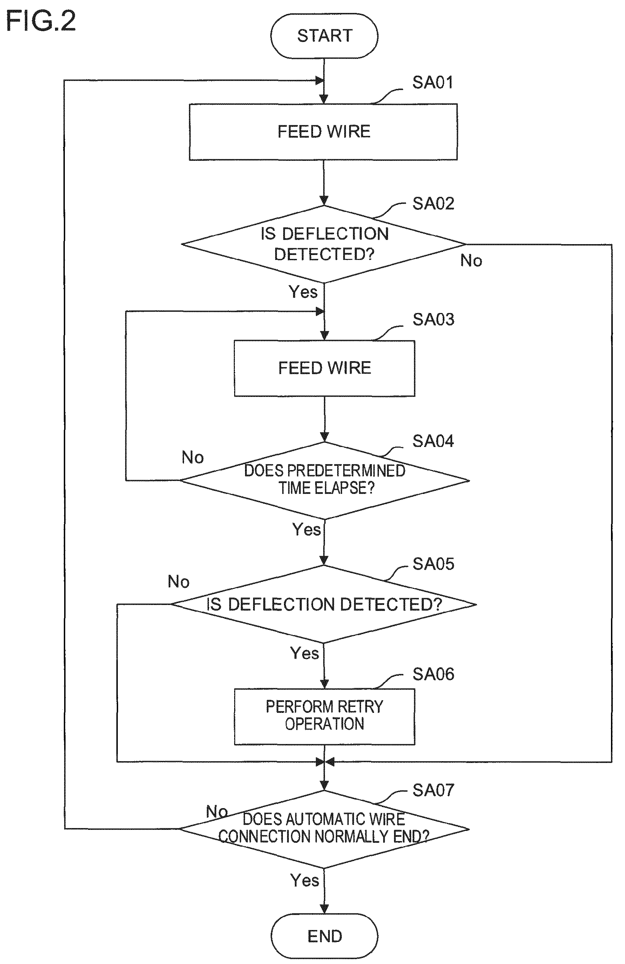

Fig. 2 is a flowchart illustrating an automatic wire connection control process executed by the control device 20 of this embodiment.
[Step SA01] When the automatic wire connection process starts, the automatic wire connection control unit 21 outputs the command (wire feeding command) relating to the automatic wire connection to the motor control device 30, and performs a feeding control of the wire electrode 2.
[Step SA02] The automatic wire connection control unit 21 determines whether the signal indicating the deflection occurrence of the wire electrode 2 is output from the wire-deflection determining device 40. The automatic wire connection control unit commands the clocking unit 22 to clock a time, and the procedure proceeds to Step SA03 in a case where the signal indicating the deflection occurrence of the wire electrode 2 is output. The procedure proceeds to Step SA07 in a case where the signal is not output.
[Step SA03] The automatic wire connection control unit 21 outputs the command (wire feeding command) relating to the automatic wire connection to the motor control device 30, and continues the feeding control of the wire electrode 2.
[Step SA04] The automatic wire connection control unit 21 detects the deflection of the wire electrode 2, and then determines whether the predetermined time elapses. The procedure proceeds to Step SA05 in a case where the predetermined time elapses. The procedure returns to Step SA03 in a case where the predetermined time does not elapse.
[Step SA05] The automatic wire connection control unit 21 determines whether the signal indicating the deflection occurrence of the wire electrode 2 is output from the wire-deflection determining device 40. The procedure proceeds to Step SA06 in a case where the signal indicating the deflection occurrence of the wire electrode 2 is output. The procedure proceeds to Step SA07 in a case where the signal is not output.
[Step SA06] The automatic wire connection control unit 21 performs the retry operation of the automatic wire connection.
[Step SA07] The automatic wire connection control unit 21 determines whether the automatic wire connection normally ends. This process ends in a case where the automatic wire connection normally ends. The procedure returns to Step SA01 in a case where the automatic wire connection does not end.

As described above, even when the deflection of the wire electrode 2 is detected once, the wire electric discharge machine 1 of this embodiment does not perform the retry operation in a case where the deflection is resolved within the predetermined time, thereby shortening the wire connection time. In addition, the deflection is detected not depending on the length of the fed wire electrode 2 unlike JP 9-108950 A, and thus even when a connection fault occurs at the initial stage of the automatic wire connection, the retry operation can be performed before the connection fault develops into a serious connection fault.

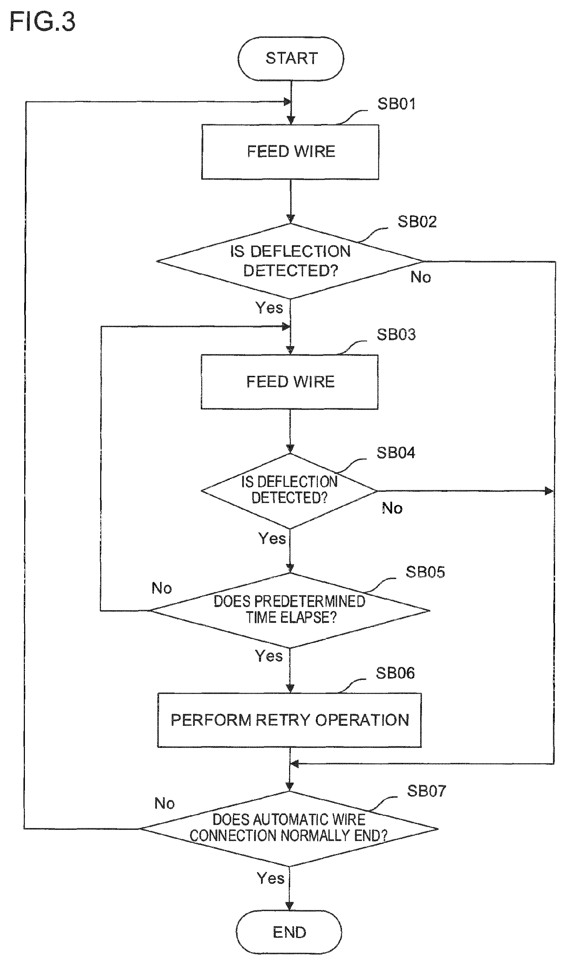

Fig. 3 is a flowchart illustrating a modification example of the automatic wire connection control process executed by the control device 20 of this embodiment.
[Step SB01] When the automatic wire connection process starts, the automatic wire connection control unit 21 outputs a command (wire feeding command) relating to the automatic wire connection to the motor control device 30, and performs the feeding control of the wire electrode 2.
[Step SB02] The automatic wire connection control unit 21 determines whether the signal indicating the deflection occurrence of the wire electrode 2 is output from the wire-deflection determining device 40. The automatic wire connection control unit commands the clocking unit 22 to clock a time, and the procedure proceeds to Step SB03 in a case where the signal indicating the deflection occurrence of the wire electrode 2 is output. The procedure proceeds to Step SB07 in a case where the signal is not output.
[Step SB03] The automatic wire connection control unit 21 outputs the command (wire feeding command) relating to the automatic wire connection to the motor control device 30, and continues the feeding control of the wire electrode 2.
[Step SB04] The automatic wire connection control unit 21 determines whether the signal indicating the deflection occurrence of the wire electrode 2 is output from the wire-deflection determining device 40. The procedure proceeds to Step SB05 in a case where the signal indicating the deflection occurrence of the wire electrode 2 is output. The procedure proceeds to Step SB07 in a case where the signal is not output.
[Step SB05] The automatic wire connection control unit 21 detects the deflection of the wire electrode 2, and then determines whether the predetermined time elapses. The procedure proceeds to Step SB06 in a case where the predetermined time elapses. The procedure returns to Step SB03 in a case where the predetermined time does not elapse.
[Step SB06] The automatic wire connection control unit 21 performs the retry operation of the automatic wire connection.
[Step SB07] The automatic wire connection control unit 21 determines whether the automatic wire connection normally ends. This process ends in a case where the automatic wire connection normally ends. The procedure returns to Step SB01 in a case where the automatic wire connection does not end.

As described above, even after the deflection of the wire electrode 2 is detected once, the determination on whether the wire electrode 2 is deflected is continuously performed as a phase of determining whether to perform the retry operation. The retry operation is performed in a case where the deflection is continuously detected during the predetermined time, and the process returns to an ordinary wire connection operation at the stage in a case where the deflection of the wire electrode 2 is resolved within the predetermined time, thereby further shortening the time.

Incidentally, the predetermined time from the above-described detection of the deflection of the wire electrode 2 to the determination on the re-detection can be appropriately changed in consideration that a rigidity is varied depending on the diameter or the material of the wire electrode 2. For example, in a case where the rigidity of the wire is low, the wire is likely to be difficult to connect due to a deformation when the wire electrode 2 is fed even after wire electrode 2 is deflected. Therefore, the time may be set to be shortened in such a case. At this time, a table in which the predetermined time to the re-detection of the deflection is set at each specification such the diameter, the material, or the like of the wire electrode 2 may be stored, and the predetermined time may be automatically changed on the basis of the specification of the wire electrode 2 attached to the wire electric discharge machine 1.

Although the embodiment of the present invention is described hereinbefore, the present invention is not limited to the above-described embodiment, and can be implemented in various modes by modifying the above-described embodiment appropriately.

Although the embodiment of the present invention is described hereinbefore, the present invention is not limited to the above-described embodiment, and can be implemented in another mode by modifying the above-described embodiment appropriately.

## Claims

1. A wire electric discharge machine comprising:
a wire electrode deflection detecting unit detecting a deflection of a fed wire electrode at the time of a wire automatic wire connection;
a wire feeding unit feeding the wire electrode after the wire electrode deflection detecting unit detects the deflection of the wire electrode;
a clocking unit clocking a time taken after the deflection of the wire electrode is detected;
a determining unit determining whether the wire electrode deflection detecting unit detects the deflection of the wire electrode after the time clocked by the clocking unit exceeds a predetermined time; and
a unit executing a retry operation of the automatic wire connection to rewind the wire electrode in a case where the determining unit detects the deflection of the wire electrode and continuing to feed the wire electrode in a case where the deflection of the wire electrode is not detected.

2. The wire electric discharge machine according to claim 1, wherein
it is repeatedly determined whether the wire electrode deflection detecting unit detects the deflection of the wire electrode within the predetermined time clocked by the clocking unit,
the clocking of the clocking unit is ended in a case where the deflection of the wire electrode is not detected, and
the retry operation is executed after the elapse of the predetermined time in a case where the deflection of the wire electrode is detected in all determinations during the predetermined time.

3. The wire electric discharge machine according to claim 1 or 2, wherein
the predetermined time is set for each diameter or material of the wire electrode.
